# EUROPÄISCHE PATENTSCHRIFT

(11) **EP 0 861 273 B1**
(45) Veröffentlichungstag und Bekanntmachung des Hinweises auf die Patenterteilung: **04.08.1999**
(21) Anmeldenummer: 96937290.3
(22) Anmeldetag: 30.10.1996
(51) Int. Cl.: C08F 12/04

(54) **VERFAHREN ZUR HERSTELLUNG VON COPOLYMERISATEN AUS VINYLAROMATISCHEN UND OLEFINISCHEN VERBINDUNGEN DURCH DISPERSIONSPOLYMERISATION IN GEGENWART VON METALLOCENKATALYSATORSYSTEMEN**
PROCESS FOR PRODUCING COPOLYMERS FROM VINYLAROMATIC AND OLEFINIC COMPOUNDS BY DISPERSION POLYMERISATION IN THE PRESENCE OF METALLOCENE CATALYST SYSTEMS
PROCEDE DE PRODUCTION DE COPOLYMERES A PARTIR DE COMPOSES VINYLAROMATIQUES ET OLEFINIQUES PAR POLYMERISATION EN DISPERSION EN PRESENCE DE SYSTEMES CATALYSEURS METALLOCENES

(30) Priorität: 14.11.1995 DE 19542356
(43) Veröffentlichungstag der Anmeldung: 02.09.1998
(73) Patentinhaber: BASF AKTIENGESELLSCHAFT, 67056 Ludwigshafen (DE)
(72) Erfinder: GEPRÄGS, Michael, D-67240 Bobenheim-Roxheim (DE); WÜNSCH, Josef, D-67105 Schifferstadt (DE); RÖSCH, Joachim, D-67063 Ludwigshafen (DE)
(86) Internationale Anmeldenummer: EP9604708
(87) Internationale Veröffentlichungsnummer: WO9718248

(56) Entgegenhaltungen:
- EP-A- 0 361 309
- FR-A- 2 137 676

## Beschreibung

Die vorliegende Erfindung betrifft Verfahren zur Herstellung von Copolymerisaten aus vinylaromatischen und olefinischen Verbindungen.

Weiterhin betrifft die vorliegende Erfindung die Verwendung der hierbei erhältlichen Copolymerisate zur Herstellung von Fasern, Folien und Formkörpern sowie die hieraus erhältlichen Fasern, Folien und Formkörper.

Copolymerisate aus vinylaromatischen und olefinischen Verbindungen können aufgrund ihres Eigenschaftsprofils in vielen Bereichen Verwendung finden, beispielsweise als elektrische Bauteile.

Aus der EP-A 416 815 ist ein Verfahren zur Herstellung von Copolymerisaten aus vinylaromatischen und olefinischen Verbindungen bekannt, wobei man in Lösung polymerisiert. Nachteilig hierbei ist, daß das entstehende Copolymerisat nur durch aufwendiges Abtrennen des Lösungsmittels isoliert werden kann. Außerdem bereitet die zunehmende Zahigkeit der Polymerisationslösung oftmals Probleme.

Der vorliegenden Erfindung lag daher die Aufgabe zugrunde, neue Verfahren zur Herstellung von Copolymerisaten aus vinylaromatischen und olefinischen Verbindungen zur Verfügung zu stellen, die die genannten Nachteile nicht aufweisen, die insbesondere verfahrenstechnisch einfach durchführbar sind, ein leichtes Abtrennen des entstehenden Copolymerisats ermöglichen und wobei Copolymerisate mit niedrigem Restmonomergehalt entstehen.

Demgemäß wurden Verfahren zur Herstellung von Copolymerisaten aus vinylaromatischen und olefinischen Verbindungen gefunden, wobei man in Gegenwart von Metallocenkatalysatorsystemen in Dispersion polymerisiert.

Weiterhin wurde die Verwendung der hierbei erhältlichen Copolymerisate zur Herstellung von Fasern, Folien und Formkörpern gefunden sowie die hieraus erhältlichen Fasern, Folien und Formkörper.

Bei dem erfindungsgemäßen Verfahren eignen sich als vinylaromatische Verbindungen beispielsweise solche der allgemeinen Formel IV 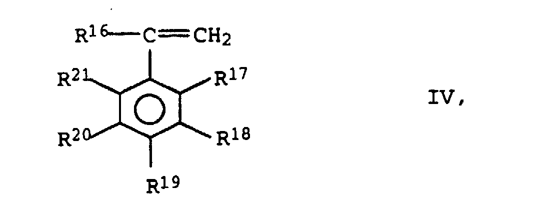 in der die Substituenten folgende Bedeutung haben:
- R¹⁶: Wasserstoff oder C₁- bis C₄-Alkyl,
- R¹⁷ bis R²¹: unabhangig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen stehen.

Bevorzugt werden vinylaromatische Verbindungen der Formel IV eingesetzt, in denen
- R¹⁶: Wasserstoff bedeutet
und
- R¹⁷ bis R²¹: für Wasserstoff, C₁- bis C₄-Alkyl, Chlor oder Phenyl stehen oder wobei zwei benachbarte Reste gemeinsam für 4 bis 12 C-Atome aufweisende cyclische Gruppen stehen, so daß sich als Verbindungen der allgemeinen Formel IV beispielsweise Naphthalinderivate oder Anthracenderivate ergeben.

Beispiele für solche bevorzugten Verbindungen sind:

Styrol, p-Methylstyrol, p-Chlorstyrol, 2,4-Dimethylstyrol, 1,4-Divinylbenzol, 4-Vinylbiphenyl, 2-Vinylnaphthalin oder 9-Vinylanthracen.

Es können auch Mischungen verschiedener vinylaromatischer Verbindungen eingesetzt werden, vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel IV ist an sich bekannt und beispielsweise in Beilstein 5, 367, 474, 485 beschrieben.

Als olefinische Verbindungen können bei dem erfindungsgemäßen Verfahren beispielsweise Ethylen oder C₃- bis C₁₀-Alkene, insbesondere C₃- bis C₁₀-Alk-1-ene eingesetzt werden. Bevorzugt sind Ethylen, Propylen, But-1-en, Isobuten, 4-Methyl-pen-1-en, Hex-1-en, Oct-1-en und Mischungen hiervon. Besonders bevorzugt ist Ethylen.

Als Metallocenkatalysatorsysteme sind solche bevorzugt, die als aktive Bestandteile
A) Metallocenkomplexe der allgemeinen Formel I 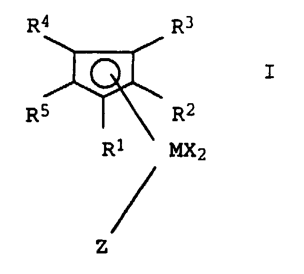 in der die Substituenten die folgende Bedeutung haben:
   - M: Titan, Zirkonium, Hafnium, Vanadium, Niob oder Tantal,
   - X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atome im Arylrest, -OR⁶ oder -NR⁶R⁷,
   - wobei R⁶, R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
   - R¹ bis R⁵: Wasserstoff, C₁- bis C₁₀-Alkyl, 5- bis 7-gliedriges Cycloalkyl, das seinerseits ein C₁-bis C₁₀-Alkyl als Substituent tragen kann, C₆-bis C₁₅-Aryl oder Arylalkyl, wobei gegebenenfalls auch zwei benachbarte Reste gemeinsam für 4 bis 15 C-Atome aufweisende cyclische Gruppen stehen können oder Si(R⁸)₃ mit
   - R⁸: C₁- bis C₁₀-Alkyl, C₃- bis C₁₀-Cycloalkyl oder C₆-bis C₁₅-Aryl,
   - Z: für X steht
   oder wobei die Reste R⁵ und Z gemeinsam eine Gruppierung - R⁹-A- bilden, in der
   - R⁹: 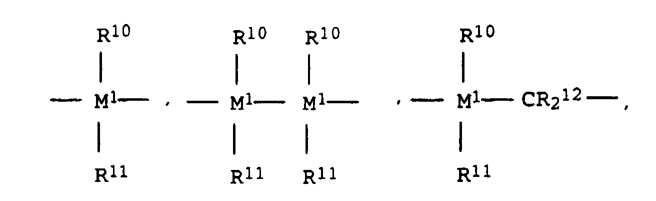 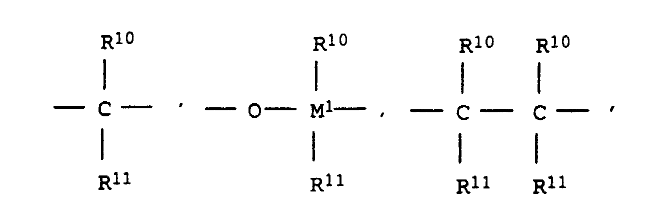 = BR¹⁰, = AlR¹⁰, -Ge-, -Sn-, -O-, -S-, = SO, = SO₂, = NR¹⁰, = CO, = PR¹⁰ oder = P(O)R¹⁰ ist,
   - wobei R¹⁰, R¹¹ und R¹²: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁰ und R¹¹ oder R¹⁰ und R¹² jeweils mit den sie verbindenden Atomen einen Ring bilden, und
   - M¹: Silicium, Germanium oder Zinn ist,
   - A: -O-, -S-, 〉NR¹³ oder 〉PR¹³ bedeuten, mit
   - R¹³: C₁- bis C₁₀-Alkyl, C₆- bis C₁₅-Aryl, C₃- bis C₁₀-Cycloalkyl, Alkylaryl, Si(R¹⁴)₃, (̵CH₂ 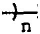 O-R¹⁴, (̵CH₂-CH₂-O 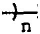 R¹⁴ oder (̵CH₂-O 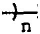 R¹⁴ mit
   - R¹⁴: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
   und
   - n: für 1, 2 oder 3 steht
   und
B) eine metalloceniumionenbildende Verbindung
enthalten.

Besonders bevorzugte Metallocenkomplexe der allgemeinen Formel I sind solche, in denen
- M: für Titan, Zirkonium oder Hafnium, insbesondere für Titan steht,
- X: Chlor, C₁- bis C₄-Alkyl oder -OR⁶ bedeutet, mit
- R⁶: C₁- bis C₆-Alkyl, insbesondere Methyl, Ethyl, Propyl oder n-Butyl,
- R¹ bis R⁵: für Wasserstoff, C₁- bis C₆-Alkyl, insbesondere Methyl, Ethyl, Propyl, n-Butyl oder tert.-Butyl, Phenyl oder zwei benachbarte Reste gemeinsam für 4 bis 15 C-Atome aufweisende cyclische Gruppen stehen,
- Z: für X steht
oder wobei die Reste R⁵ und Z gemeinsam eine Gruppierung -R⁹-A-bilden, in der
- R⁹: 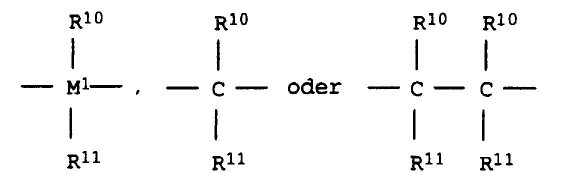 bedeutet, mit
- R¹⁰ und R¹¹: Wasserstoff oder C₁- bis C₆-Alkyl und
- M¹: Silicium,
- A: für 〉NR¹³ steht, mit
- R¹³: C₁- bis C₆-Alkyl, insbesondere Methyl, Ethyl, Propyl, n-Butyl oder tert.-Butyl, Phenyl oder (̵CH₂ 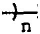 O-R¹⁴
- R¹⁴: C₁- bis C₄-Alkyl, insbesondere Methyl bedeutet
und
- n: für die Zahl 2 steht.

Als besonders geeignete Metallocenkomplexe der allgemeinen Formel I sind zu nennen:
Pentamethylcyclopentadienyltitantrichlorid,
Pentamethylcyclopentadienyltitantrimethyl,
Pentamethylcyclopentadienyltitantrimethylat,
[(Methoxyethylamido)dimethylsilyl(tetrametbylcyclopentadienyl)]dichlorotitan,
[(Methoxyethylamido)dimethylsilyl(tetramethylcyclopentadienyl)]dimethyltitan,
[(Methoxyethylamido)dimethylsilyl(3-tert.-butylcyclopentadienyl)]dichlorotitan,
[Methoxyethylamido)dimethylsilyl(3-tert.-butylcyclopentadienyl)]dimethyltitan,
[(Methoxyethylamido)dimethylsilyl(cyclopentadienyl)]dichlorotitan,
[(Methoxyethylamido)dimethylsilyl(cyclopentadienyl)]dimethyltitan,
[(tert.-Butylamido)dimethylsilyl(tetramethylcyclopentadienyl)]dichlorotitan.

Mischungen verschiedener Metallocenkomplexe können auch eingesetzt werden.

Die Komplexe der allgemeinen Formel I sowie Verfahren zu ihrer Herstellung sind an sich bekannt und beispielsweise in Organometallics 1995, Vol. 14, No. 7, Seite 3129 bis 3131 und im Journal of Organometallic Chemistry, 369 (1989), 359-370 beschrieben.

Als metalloceniumionenbildende Verbindung B) können die Katalysatorsysteme offenkettige oder cyclische Alumoxanverbindungen enthalten.

Geeignet sind beispielsweise offenkettige oder cyclische Alumoxanverbindungen der allgemeinen Formel II oder III 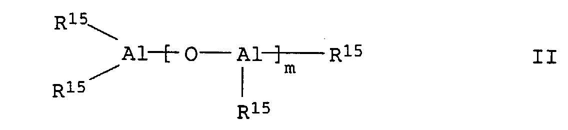 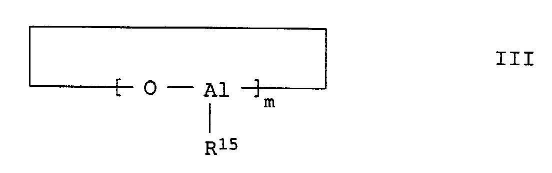
- wobei R¹⁵: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Als Lösungsmittel für diese Katalysatorsysteme werden üblicherweise aromatische Kohlenwasserstoffe eingesetzt, bevorzugt mit 6 bis 20 C-Atomen, insbesondere Xylole und Toluol sowie deren Mischungen.

Als metalloceniumionenbildende Verbindung B) können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.

Als starke neutrale Lewissauren sind Verbindungen der allgemeinen Formel V

M²X¹X²X³ V

bevorzugt, in der
- M²: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel V, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/3067 beschrieben.

Als ionische Verbindungen mit lewissäuren Kationen sind Verbindungen der allgemeinen Formel VI

[(**Y**^{a+})Q₁Q₂...Q_{z}]^{d+} VI

geeignet, in denen
- **Y**: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁-bis C₁₀-Cycloalkyl, welches gegebenenfalls mit C₁-bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 93/3067 genannt, bevorzugtes Kation ist das N,N-Dimethylanilinium.

Es hat sich als besonders geeignet erwiesen, wenn das molare Verhaltnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Das erfindungsgemäße Verfahren wird als Dispersionspolymerisation durchgeführt. Als Dispergierhilfsmittel eignen sich beispielsweise Styrol-Dien-Zweiblockcopolymere oder Styrol-Dien-Styrol-Dreiblockcopolymere und als Dispergiermedium sind aliphatische Kohlenwasserstoffe bevorzugt.

Vorzugsweise wird das Dispergierhilfsmittel in einer Menge von 1 bis 10 Gew.-%, bezogen auf die eingesetzte Menge an vinylaromatischen Verbindungen, verwendet. Zweckmäßig wird es der zu polymerisierenden Dispersion gelöst im vinylaromatischen Monomeren zugesetzt.

Geeignete Zweiblockcopolymere können aus einem Polymerblock aus Styrol und einem Polymerblock aus Butadien, bevorzugt 1,4-Polybutadien, bestehen. Die Summe der Gew.-% der Blöcke aus Styrol und aus Butadien beträgt 100, wobei die Zusammensetzung variieren kann. Der Styrolblock kann 10 bis 90 Gew.-%, bevorzugt 20 bis 80 Gew.-% ausmachen, entsprechend der Butadienblock 90 bis 10 Gew.-%, vorzugsweise 80 bis 20 Gew.-%. Geeignet sind auch Styrol-Butadien-Zweiblockcopolymere, die hydriert sein können.

Von den Styrol-Dien-styrol-Dreiblockcopolymeren eignen sich beispielsweise solche, bei denen der Dien-Block aus Polybutadien oder Polyisopren besteht und wobei der Dien-Block hydriert oder unhydriert sein kann.

Zweiblock- und Dreiblockcopolymere sowie Verfahren zu ihrer Herstellung sind an sich bekannt und beispielsweise in Thermoplastic Elastomers (1987), N.R. Liegge et al (ed.) beschrieben. Geeignete Copolymere sind auch im Handel erhältlich, beispielsweise Kraton® (Fa. Shell).

Von den aliphatischen Kohlenwasserstoffen, die als Dispergiermedium eingesetzt werden können, sind solche mit 4 bis 10 C-Atomen besonders geeignet, beispielsweise Butan, Pentan, Hexan und Heptan oder Kohlenwasserstoffgemische.

Bevorzugt geht man bei dem erfindungsgemäßen Verfahren so vor, daß man das Dispergierhilfsmittel in der vinylaromatischen Verbindung löst, das Dispergierhilfsmittel zugibt, bevorzugt in einer Menge von 1 bis 10 Gew.-%, bezogen auf die vinylaromatische Verbindung, dann die olefinische Verbindung durchleitet und das Metallocenkatalysatorsystem hinzugibt.

Die Polymerisationsbedingungen sind unkritisch, vorzugsweise arbeitet man bei Temperaturen im Bereich von 50 bis 100°C, bei einem Druck von 1 bis 5 bar und polymerisiert 0,5 bis 10 Stunden. Die Polymerisation kann durch Zugabe von protischen Verbindungen, beispielsweise Methanol, abgebrochen werden und das Dispergiermedium durch Temperaturerhöhung entfernt werden.

Vorzugsweise liegt die Menge an eingesetzten vinylaromatischen Verbindungen im Bereich von 50 bis 1000 ml, die Menge an olefinischen Verbindungen im Bereich von 0,1 bis 10 l/min.

Die entstehenden Copolymerisate weisen bevorzugt einen Anteil an der vinylaromatischen Verbindung von 10 bis 90 Gew.-% auf, insbesondere 50 bis 75 Gew.-%.

Das erfindungsgemäße Verfahren ist verfahrenstechnisch einfach durchführbar, die entstehenden Copolymerisate sind leicht abtrennbar, bevorzugt durch Abdampfen des Dispergiermittels, das somit durch Kondensation im Kreisprozeß geführt werden kann, weiterhin fallen die entstehenden Copolymerisat in Partikelform an und weisen einen geringen Restmonomergehalt auf. Die entstehenden Copolymerisate eignen sich zur Herstellung von Fasern, Folien und Formkörpern.

### Beispiele

### Beispiele 1 und 2: Herstellung von Styrol-Ethylen-Copolymerisaten

### Beispiel 1:

In einem inertisierten Reaktionsgefäß wurden als Dispergierhilfsmittel 5,0 g eines Styrol-Butadien-Zweiblockcopolymeren mit einem Styrolgehalt von 40 Gew.-% (hydriert) in 100 ml Styrol gelöst und 20 Minuten bei Raumtemperatur gerührt. Anschließend wurden als Dispergiermittel 300 ml Pentan zugegeben und weitere 20 Minuten unter Durchleiten von Ethylen (Durchfluß: 100 l/h) gerührt. 25 µmol [(tert.-Butylamido)dimethylsilyl(tetramethylcyclopentadienyl)]dichlorotitan I1 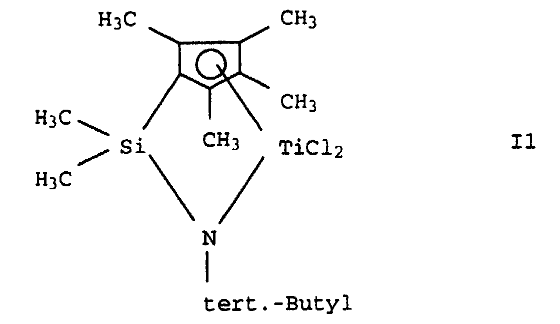 wurden mit 3,3 ml einer 1,53 molaren toluolischen Methylalumoxan-Lösung versetzt und in das Reaktionsgefäß gegeben. Der Ethylenfluß wurde während der gesamten Polymerisationsdauer aufrechterhalten. Die freiwerdende Polymerisationswärme (die Temperatur stieg auf 35°C) führte zum Sieden des Pentans. Nach einer Polymerisationszeit von 3 Stunden wurde die Reaktion durch Zugabe von 20 ml Methanol abgebrochen und die Temperatur auf 40°C erhöht, wodurch das Pentan abdampfte. Das entstandene Copolymerisat fiel als Pulver an.

### Beispiel 2:

Es wurde wie in Beispiel 1 gearbeitet, jedoch wurden 10,0 g des Styrol-Butadien-Zweiblockcopolymeren eingesetzt und 15 µmol I1. Die Polymerisationszeit betrug 4 Stunden.

Über die Eigenschaften der entstandenen Copolymerisate gibt die nachfolgende Tabelle Aufschluß.

Der Styrolanteil im Copolymerisat wurde mittels ¹³C-NMR ermittelt, die Gewichtsmittelwerte M_{w} und Zahlenmittelwerte Mₙ mittels Gelpermeationschromatographie, der Restmonomergehalt an Styrol mittels Gaschromatographie.

**Tabelle**

| Bsp. | Ausbeute [g] | Styrolanteil [Gew.-%] | M_{w} | M_{w}/Mₙ | Restmonomergehalt [ppm] |
|---|---|---|---|---|---|
| 1 | 152 | 58 | 180 000 | 2,1 | 62 |
| 2 | 170 | 52 | 210 000 | 2,2 | 48 |

## Patentansprüche

1. Verfahren zur Herstellung von Copolymerisaten aus vinylaromatischen und olefinischen Verbindungen, dadurch gekennzeichnet, daß man in Gegenwart von Metallocenkatalysatorsystemen in Dispersion polymerisiert.

2. Verfahren nach Anspruch 1, dadurch gekennzeichnet, daß man als Dispergierhilfsmittel Styrol-Dien-Zweiblockcopolymere oder Styrol-Dien-Styrol-Dreiblockcopolymere verwendet.

3. Verfahren nach den Ansprüchen 1 bis 2, dadurch gekennzeichnet, daß man das Dispergierhilfsmittel in einer Menge von 1 bis 10 Gew.-%, bezogen auf die eingesetzte Menge an vinylaromatischen Verbindungen, verwendet.

4. Verfahren nach den Ansprüchen 1 bis 3, dadurch gekennzeichnet, daß man als Dispergiermedium aliphatische Kohlenwasserstoffe verwendet.

5. Verfahren nach den Ansprüchen 1 bis 4, dadurch gekennzeichnet, daß man als Metallocenkatalysatorsysteme solche verwendet, die als aktive Bestandteile
A) Metallocenkomplexe der allgemeinen Formel I 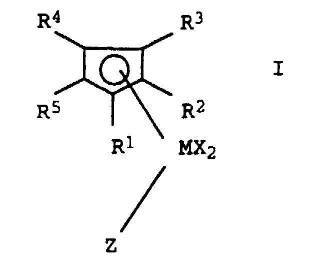 in der die Substituenten die folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atome im Arylrest, -OR⁶ oder -NR⁶R⁷,
wobei R⁶, R⁷ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können oder Si(R⁸)₃ mit
R⁸ C₁- bis C₁₀-A1kyl, C₃- bis C₁₀-Cycloalkyl oder C₆- bis C₁₅-Aryl,
Z für X steht
oder wobei die Reste R⁵ und Z gemeinsam eine Gruppierung -R⁹-A- bilden, in der
R⁹ 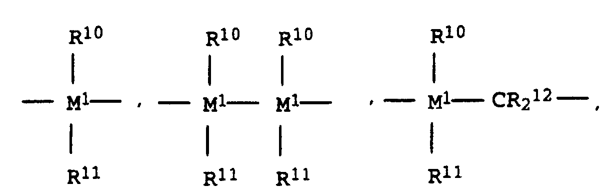 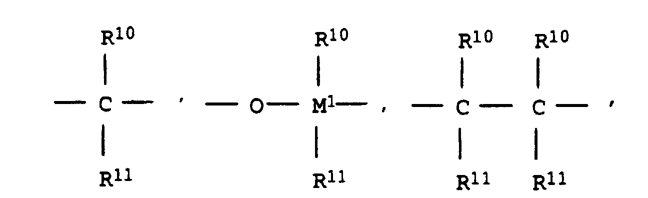 = BR¹⁰, = AlR¹⁰, -Ge-, -Sn-, -O-, -S-, = SO, = SO₂, = NR¹⁰, = CO, = PR¹⁰ oder = P(O)R¹⁰ ist,
wobei R¹⁰, R¹¹ und R¹² gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R¹⁰ und R¹¹ oder R¹⁰ und R¹² jeweils mit den sie verbindenden Atomen einen Ring bilden, und
M¹ Silicium, Germanium oder Zinn ist,
A -O-, -S-, 〉NR¹³ oder 〉PR¹³ bedeuten, mit
R¹³ C₁- bis C₁₀-Alkyl, C₆- bis C₁₅-Aryl, C₃- bis C₁₀-Cycloalkyl, Alkylaryl, Si(R¹⁴)₃, (̵CH₂ 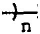 O-R¹⁴ , (̵CH₂-CH₂-O 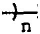 R¹⁴ oder (̵CH₂-O 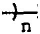 R¹⁴ mit
R¹⁴ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
und
n für 1, 2 oder 3 steht
und
B) eine metalloceniumionenbildende Verbindung
enthalten.

6. Verfahren nach den Ansprüchen 1 bis 5, dadurch gekennzeichnet, daß als metalloceniumionenbildende Verbindung B) offenkettige oder cyclische Alumoxanverbindungen der allgemeinen Formel II oder III 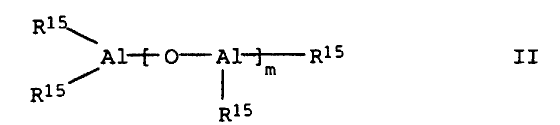 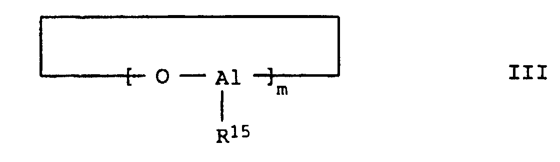
wobei R¹⁵ eine C₁- bis C₄-Alkylgruppe bedeutet und m für eine ganze Zahl von 5 bis 30 steht,
eingesetzt werden.

7. Verfahren nach den Ansprüchen 1 bis 5, dadurch gekennzeichnet, daß als metalloceniumionenbildende Verbindung B) eine Koordinationskomplexverbindung, ausgewählt aus der Gruppe der starken, neutralen Lewissauren, der ionischen Verbindungen mit lewissäuren Kationen und der ionischen Verbindungen mit Brönsted-Säuren als Kationen eingesetzt wird.

8. Verwendung der gemäß den Ansprüchen 1 bis 7 hergestellten Copolymerisate zur Herstellung von Fasern, Folien und Formkörpern.

9. Fasern, Folien und Formkörper, erhältlich aus den gemäß den Ansprüchen 1 bis 7 hergestellten Copolymerisaten als wesentliche Komponente.

## Claims

1. A process for preparing copolymers of vinylaromatic and olefinic compounds, wherein the polymerization is carried out in dispersion in the presence of metallocene catalyst systems.

2. A process as claimed in claim 1, wherein styrene-diene two-block copolymers or styrene-diene-styrene three-block copolymers are used as dispersion aid.

3. A process as claimed in claim 1 or 2, wherein the dispersion aid is used in an amount of from 1 to 10 % by weight, based on the amount of vinylaromatic compounds used.

4. A process as claimed in any of claims 1 to 3, wherein aliphatic hydrocarbons are used as dispersion medium.

5. A process as claimed in any of claims 1 to 4, wherein the metallocene catalyst systems used are ones comprising as active constituents
A) metallocene complexes of the formula I 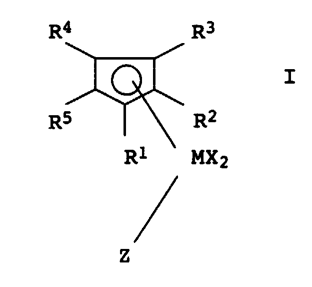 where the substituents have the following meanings:
M is titanium, zirconium, hafnium, vanadium, niobium or tantalum,
X is fluorine, chlorine, bromine, iodine, hydrogen, C₁-C₁₀-alkyl, C₆-C₁₅-aryl, alkylaryl having from 1 to 10 carbon atoms in the alkyl radical and from 6 to 20 carbon atoms in the aryl radical, -OR⁶ or -NR⁶R⁷,
where R⁶, R⁷ are C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
R¹ to R⁵ are hydrogen, C₁-C₁₀-alkyl, 5- to 7-membered cycloalkyl which may in turn bear a C₁-C₁₀-alkyl group as substituent, C₆-C₁₅-aryl or arylalkyl, where two adjacent radicals may also together form a cyclic group having from 4 to 15 carbon atoms, or Si(R⁸)₃ where
R⁸ is C₁-C₁₀-alkyl, C₃-C₁₀-cycloalkyl or C₆-C₁₅-aryl,
Z is X
or the radicals R⁵ and Z together form a -R⁹-A- group,
where
R⁹ is 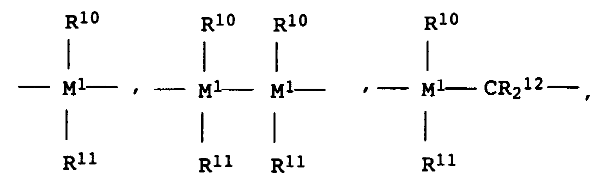 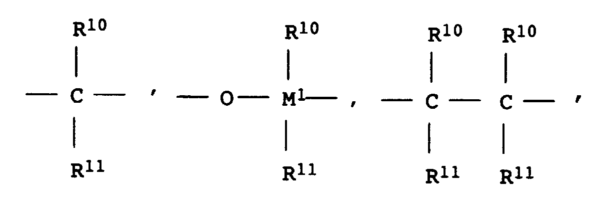 = BR¹⁰, = AlR¹⁰, -Ge-, -Sn-, -O-, -S-, = SO, = SO₂, = NR¹⁰, = CO, = PR¹⁰ or = P(O)R¹⁰,
where R¹⁰, R¹¹ and R¹² are
identical or different and are each a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group or R¹⁰ and R¹¹ or R¹⁰ and R¹², in each case together with the atoms connecting them, form a ring, and
M¹ is silicon, germanium or tin,
A is ―O―, ―S―, 〉NR¹³ or 〉PR¹³,
where
R¹³ is C₁-C₁₀-alkyl, C₆-C₁₅-aryl, C₃-C₁₀-cycloalkyl, alkylaryl, Si(R¹⁴)₃, (̵CH₂ 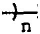 O-R¹⁴ , (̵CH₂-CH₂-O 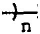 R¹⁴ or (̵CH₂-O 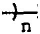 R¹⁴ where
R¹⁴ is hydrogen, C₁-C₁₀-alkyl, C₆-C₁₅-aryl, which may in turn bear C₁-C₄-alkyl groups as substituents, or C₃-C₁₀-cycloalkyl
and
n is 1, 2 or 3
and
B) a compound capable of forming metallocenium ions.

6. A process as claimed in any of claims 1 to 5, wherein the compound B) capable of forming metallocenium ions comprises open-chain or cyclic aluminoxane compounds of the formula II or III 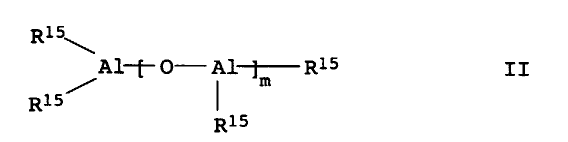 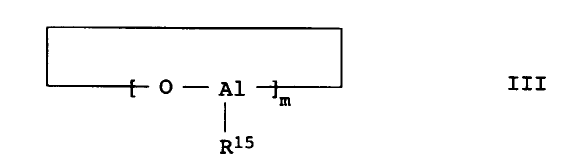
where R¹⁵ is a C₁-C₄-alkyl group and m is an integer from 5 to 30.

7. A process as claimed in any of claims 1 to 5, wherein the compound B) capable of forming metallocenium ions is a coordination compound selected from the group consisting of strong, uncharged Lewis acids, ionic compounds containing Lewis acid cations and ionic compounds containing Brönsted acids as cations.

8. The use of a copolymer prepared as claimed in any of claims 1 to 7 for producing fibers, films and moldings.

9. A fiber, film or molding comprising as significant component a copolymer prepared as claimed in any of claims 1 to 7.

## Revendications

1. Procédé de préparation de copolymères de composés vinylaromatiques et oléfiniques, caractérisé en ce qu'on effectue une polymérisation en dispersion en présence de systèmes catalytiques à base de métallocènes.

2. Procédé suivant la revendication 1, caractérisé en ce qu'on utilise, comme agents auxiliaires de dispersion, des copolymères à deux blocs de styrène-diène ou des copolymères à trois blocs de styrène-diène-styrène.

3. Procédé suivant l'une des revendications 1 et 2, caractérisé en ce qu'on utilise un agent auxiliaire de dispersion en une quantité de 1 à 10% en poids, par rapport à la quantité mise en oeuvre de composés vinylaromatiques.

4. Procédé suivant l'une des revendications 1 à 3, caractérisé en ce qu'on utilise, comme milieu de dispersion, des hydrocarbures aliphatiques.

5. Procédé suivant l'une des revendications 1 à 4, caractérisé en ce qu'on utilise, comme systèmes catalytiques à base de métallocènes, ceux qui contiennent, comme composants actifs,
A) des complexes de métallocène de la formule générale I : 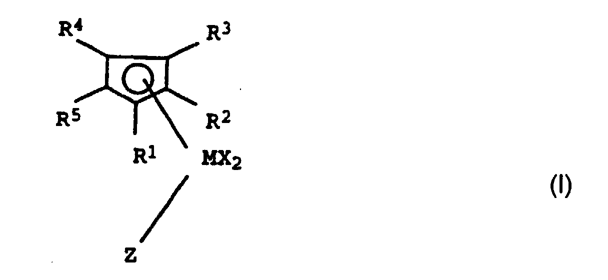 dans laquelle les substituants ont les significations suivantes :
M est du titane, du zirconium, de l'hafnium, du vanadium, du niobium ou du tantale,
X est du fluor, du chlore, du brome, de l'iode, de l'hydrogène, un groupe alkyle en C₁-C₁₀, aryle en C₆-C₁₅, alkylaryle avec 1 à 10 atomes de C dans le radical alkyle et 6 à 20 atomes de C dans le radical aryle, -OR⁶ ou -NR⁶R⁷,
R⁶ et R⁷ représentant un groupe alkyle en C₁-C₁₀, aryle en C₆-C₁₅, alkylaryle, arylalkyle, fluoroalkyle ou fluoroaryle comportant chacun 1 à 10 atomes de C dans le radical alkyle et 6 à 20 atomes de C dans le radical aryle,
R¹ à R⁵ représentent de l'hydrogène, un groupe alkyle en C₁-C₁₀, cycloalkyle pentagonal à heptagonal qui, à son tour, peut porter un radical alkyle en C₁-C₁₀, comme substituant, aryle en C₆-C₁₅ ou arylalkyle, deux radicaux voisins pouvant aussi représenter éventuellement conjointement des groupes cycliques présentant 4 à 15 atomes de C, ou Si(R⁸)₃, où
R⁸ représente un groupe alkyle en C₁-C₁₀, cycloalkyle en C₃-C₁₀ ou aryle en C₆-C₁₅,
Z représente X,
ou les radicaux R⁵ et Z forment conjointement un groupement -R⁹-A- dans lequel
R⁹ est 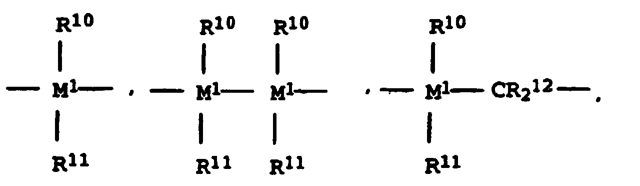 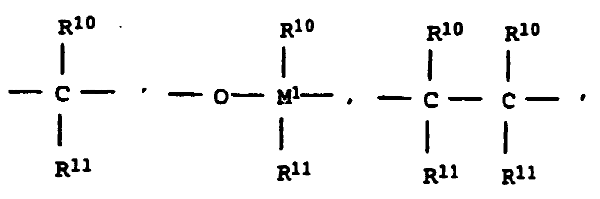 = BR¹⁰, = AlR¹⁰, -Ge-, -Sn-, -O-, -S-, = SO,
= SO₂, = NR¹⁰, = CO, = PR¹⁰ ou = P(O)R¹⁰
où R¹⁰, R¹¹ et R¹² sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou R¹⁰ et R¹¹ ou R¹⁰ et R¹² forment chacun un noyau avec les atomes qui les relient, et
M¹ est du silicium, du germanium ou de l'étain,
A représente -O-, -S-, 〉NR¹³ ou 〉PR¹³
où
R¹³ représente un groupe alkyle en C₁-C₁₀, aryle en C₆-C₁₅, cycloalkyle en C₃-C₁₀, alkylaryle, Si(R¹⁴)₃, (̵CH₂ 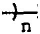 O-R^{1 4}, (̵CH₂-CH₂-O 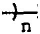 R¹⁴ ou (̵CH₂-O 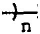 R¹⁴
où
R¹⁴ représente de l'hydrogène, un groupe alkyle en C₁-C₁₀, aryle en C₆-C₁₅, qui, à son tour, peut être substitué par des groupes alkyle en C₁-C₄, ou cycloalkyle en C₃-C₁₀, et
n est égal à 1, 2 ou 3, et
B) un composé générateur d'ions métallocénium.

6. Procédé suivant l'une des revendications 1 à 5, caractérisé en ce que, comme composé B) générateur d'ions métallocénium, on met en oeuvre des composés d'alumoxane à chaîne ouverte ou cyclique, répondant aux formules générales II ou III : 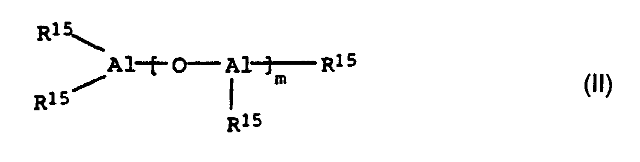 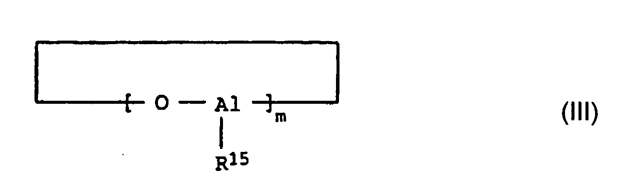
dans lesquelles R¹⁵ représente un groupe alkyle en C₁-C₄ et m représente un nombre entier de 5 à 30.

7. Procédé suivant l'une des revendications 1 à 5, caractérisé en ce que, comme composé B) générateur d'ions métallocénium, on met en oeuvre un composé complexe de coordination, choisi parmi le groupe des acides de Lewis forts, neutres, des composés ioniques à cations d'acides de Lewis et des composés ioniques avec des acides de Brönsted comme cations.

8. Utilisation des copolymères préparés selon l'une des revendications 1 à 7, pour la fabrication de fibres, de feuilles et de corps façonnés.

9. Fibres, feuilles et corps façonnés, que l'on peut obtenir à partir des copolymères préparés selon l'une des revendications 1 à 7, comme composants essentiels.
